# EUROPÄISCHE PATENTSCHRIFT

(11) **EP 2 229 911 B1**
(45) Veröffentlichungstag und Bekanntmachung des Hinweises auf die Patenterteilung: **14.09.2016**
(21) Anmeldenummer: 10155393.1
(22) Anmeldetag: 03.03.2010
(51) Int. Cl.: A61C 8/00

(54) **Verfahren zum Herstellen eines Abutments**
Method for producing an abutment
Procédé destiné à la fabrication d'un contrefort

(30) Priorität: 20.03.2009 DE 102009003650
(43) Veröffentlichungstag der Anmeldung: 22.09.2010
(73) Patentinhaber: DENTSPLY International Inc., York, PA 17401 (US)
(72) Erfinder: Lange, Gerlinde, 63505 Langenselbold (DE); Bachmann, Horst, 63863 Eschau (DE); Fuchs, Frank, 64354 Reinheim (DE); Hilbert, Alexander, 63110 Rodgau (DE)
(74) Vertreter: Stoffregen, Hans-Herbert

(56) Entgegenhaltungen:
- US-A1- 2007 134 625
- US-B1- 6 558 162

## Beschreibung

Die Erfindung bezieht sich auf ein Verfahren zum Herstellen eines individuellen Abutments bestimmt für einen Zahnersatz zum Einsetzen in ein in einem Kieferbereich verankertes Implantat mit einem Implantatanschluss, auf dem das Abutment fixiert wird oder zu dem das Abutment ausgerichtet wird, unter Verwendung eines von dem mit dem Implantat versehenen Kieferbereich abgeformten Arbeitsmodells, wobei der oberhalb des Implantats freigelegte und durch einen von dem Implantatanschluss ausgehenden Sulcus-Former geformte Sulcus-Bereich des Zahnfleisches in dem Arbeitsmodell nachgebildet ist und wobei das herzustellende Abutment einen innerhalb des Sulcus-Bereichs verlaufenden Sulcus-Abschnitt und einen sich anschließenden Kopfabschnitt zur Aufnahme eines Zahnersatzteils umfasst, das ggfs. integraler Bestandteil des Kopfabschnitts ist.

Aus der EP-B-0 891 163 bzw. EP-B-1 518 511 ist ein Zahnersatz bekannt, bei dem das ein Implantat mit einer Krone verbindende Abutment, das auch als Pfosten bezeichnet werden kann, individuell derart gestaltet ist, dass sämtliche über dem Zahnfleisch vorstehenden Flächen des Abutments einen geometrischen Verlauf aufweisen, der dem der entsprechenden Flächen des äußeren sichtbaren Teils des Zahnersatzes, also üblicherweise einer Krone entspricht, allerdings mit kleinerer Dimensionierung, da das Abutment mit einem Käppchen bzw. einer Verblendung versehen wird.

Bei einem implantatgestützten Zahnersatz nach der EP-B-1 062 916 wird ein Arbeitsmodell eines mit einem Zahnersatz zu versehenen Kieferbereichs hergestellt und in das Arbeitsmodell ein Manipulier-Implantat mit Hilfselementen eingesetzt, die sodann gescannt werden, um Basisdaten zu ermitteln, die benutzt werden, um Einschubdaten eines auf das Abutment aufzubringenden Gerüsts oder eine das Gerüst umfassende Superkonstruktion zu ermitteln. Hierzu wird das Abutment individuell gestaltet, wobei ein zu bearbeitendes Abutment-Rohteil verwendet wird, das mit dem geringsten Bearbeitungsaufwand an das benötigte anpassbar ist.

Ein Zahnimplantatsystem ist aus der DE-B-10 2007 018 453 bekannt. Dieses umfasst ein Zahnimplantat und eine auf diesem aufgebaute Suprakonstruktion, die zur mechanischen Unterstützung einen Aufbaupfosten aufweist, der individuell erstellbar ist.

Gegenstand der WO-A-2004/060197 ist ein Verfahren zur automatischen Erzeugung einer dentalen Suprastruktur zur Verbindung mit einem Implantat. Ein eingesetztes Abutment kann dabei für die Schulterbreite, Stumpfhöhe und Drehwinkel optimiert werden.

Der US 6 558 162 B1 ist ein Abutment für ein Implantatsystem zu entnehmen, das Markierungen aufweist.

Gegenstand der US 2007/0134625 A1 ist die Herstellung von implantatbasiertem Zahnersatz, der mittels CAD hergestellt wird.

Auch wenn nach dem Stand der Technik individuell gestaltete Abutments bekannt sind, werden für den innerhalb des Zahnfleisches verlaufenden Abschnitt standardisierte Geometrien verwendet, ohne die individuellen Gegebenheiten des Kiefer- und Zahnfleischbereichs zu berücksichtigen, in den der Zahnersatz und damit das Abutment eingesetzt wird.

Der vorliegenden Erfindung liegt die Aufgabe zu Grunde, ein Verfahren zuvor beschriebener Art so weiterzubilden, dass das Abutment in seinem innerhalb des Zahnfleischs verlaufenden Bereich geometrisch auf den Verlauf des Zahnfleisches angepasst bzw. auf diesen ausgelegt wird. Dabei soll insbesondere sichergestellt sein, dass eine Anpassung zwischen Abutment und Zahnfleisch derart erfolgt, dass Ablagerungen vermieden werden und ein hierdurch bedingtes Entzünden des Zahnfleisches unterbleibt. Auch soll eine herstellungstechnische Vereinfachung gegeben sein.

Zur Lösung der Aufgabe sieht die Erfindung im Wesentlichen vor, dass der Sulcus-Bereich des einen dem Implantatanschluss entsprechenden Hilfsimplantatanschluss aufweisenden Arbeitsmodells gemessen wird, dass auf der Basis der durch die Messung gewonnenen Daten ein Sulcus-Abschnittsmodell ermittelt wird mit einer Umfangsfläche und einer diese implantantseitig begrenzenden Ist-Sulcuslinie, dass fehlende Daten zwischen ermitteltem Hilfsimplantatanschluss oder einem auf diesen bezogenen Nullpunktbereich und der Ist-Sulcuslinie oder eine durch interaktives Verändern der Ist-Sulcuslinie festgelegten Hilfs-Sulcuslinie durch Bibliotheksdaten ergänzt werden, die dem Sulcus-Former zugeordnet sind, und dass die Daten des Sulcus-Abschnittsmodells unter Berücksichtigung der Ist-Sulcuslinie oder der Hilfs-Sulcuslinie und der Bibliotheksdaten zur Herstellung des Sulcusabschnitts verwendet werden.

Erfindungsgemäß wird insbesondere durch Scannen der Sulcus-Bereich des Arbeitsmodells gemessen, um sodann die Messdaten, also Punktewolken in ein trianguliertes Oberflächenmodell umzuwandeln, so dass grafisch das Sulcus-Abschnittsmodell bzw. Abschnitte dieses dargestellt wird bzw. werden. Hierzu werden aus den Daten ermittelte Einzelpunkte verbunden und Bereiche, in denen Messdaten fehlen, unter Berücksichtigung der ermittelten Messdaten ergänzt bzw. Daten aus einer Bibliothek berücksichtigt, die grundsätzlich dem Sulcus-Former zugeordnet sind.

Um eine eindeutige Zuordnung zwischen den Messdaten (Oberflächendaten) des Sulcus-Bereichs und den Bibliotheksdaten des Sulcus-Formers oder sonstigen für die Herstellung des Sulcus-Bereichs des Abutments erforderlichen Bibliotheksdaten zu ermöglichen, wird zunächst in das Modell ein sogenanntes Laborimplantat - das auch als Hilfsimplantat zu bezeichnen ist - eingesetzt, das von Lage und Geometrie dem des Implantats im Kiefer entspricht, soweit der Bereich betroffen ist, der für das Positionieren und Befestigen des Abutments benötigt wird. Das Laborimplantat wird sodann mit einem Hilfselement (Messhilfe) versehen, das zu dem Laborimplantat und damit dem Implantat an sich eine eindeutige geometrische Zuordnung aufweist, so dass eine eindeutige Orientierung- bzw. Lagebestimmung des Laborimplantats und damit des Implantats sichergestellt ist. Das Hilfselement und das Arbeitsmodell werden gemeinsam gemessen wie gescannt. Dabei ist es nicht erforderlich, dass gleichzeitig der gesamte Sulcus-Bereich gemessen wird, um Daten für den herzustellenden Sulcus-Abschnitt und damit das Sulcus-Abschnittsmodell zu ermitteln. Vielmehr kann zur Ermittlung des Sulcus-Abschnittsmodells zuvor das Hilfselement entfernt werden, damit das Hilfselement Teile des Sulcus-Bereichs nicht abschattet.

Da auch der in den Kiefer eingesetzte Sulcus-Former eine eindeutige Orientierung und Lage zu dem Implantat aufweist, sind folglich die in einer Bibliothek abgelegten Daten des Sulcus-Formers eindeutig den Messdaten zuzuordnen. Somit sind sämtliche Daten in einem gemeinsamen Koordinatensystem dargestellt.

Aus dem Hilfselement kann ggfs. auch der Typ des verwendeten Implantats abgeleitet werden.

Die Sulcus-Linie selbst verläuft auf der Umfangsfläche des Sulcus-Formers. Hierzu werden implantatseitig verlaufende Messdaten als erste Messpunkte ermittelt, die untereinander verbunden werden, wobei durch die Verbindungslinie die Ist-Sulcuslinie vorgegeben wird. Bei der Ermittlung der Ist-Sulcuslinie werden die Bibliotheksdaten des Sulcus-Formers berücksichtigt. Dabei werden die Daten verändert, um entweder automatisch oder interaktiv die Hilfs-Sulcuslinie festzulegen, wenn Messdaten Messpunkte ergeben würden, die zwischen dem Hilfsimplantatanschluss und dem Nullpunktbereich oder sogar unterhalb des Hilfsimplantatanschlusses liegen, wobei ein Verschieben der Ist-Sulcuslinie auf der Umfangsfläche des Sulcus-Formers bis zumindest dem Nullpunktbereich wie Nullpunktlinie oder -ebene erfolgt.

Erfindungswesentlich ist, dass die Ist-Sulcuslinie, also die durch das Messen ermittelte untere Begrenzungslinie des Sulcus-Abschnittsmodells, als Ausgangspunkt zur individuellen Gestaltung des Sulcus-Bereichs des herzustellenden Abutments benutzt werden kann. Dabei verläuft die Ist-Sulcuslinie grundsätzlich oberhalb des Nullpunktbereichs, der eine Fläche oder Linie sein kann, zwischen der und dem im Kieferbereich eingesetzten Implantat, d. h. den Implantatanschluss, der z. B. eine Implantatschulter sein kann. Eine individuelle Gestaltung des Abutments unterbleibt in diesem Implantatabschnitt, der in seiner Geometrie fest vorgegeben und auf die Konstruktion des Implantats ausgelegt ist, um sicherzustellen, dass das Abutment - ungeachtet seiner ansonsten individuellen Gestaltung - passgenau in bzw. auf das Implantat einsetz- und befestigbar ist.

Nullpunktbereich des Abutments kann Unterseite des Abutments selbst sein. Üblicherweise weist der Implantatabschnitt jedoch eine Zylinder- oder Kegelform-Geometrie auf, wobei zusätzlich Positionierungselemente wie ein Hexagon, ein Oktagon, ein Rhombus, ein Ovalzylinder endseitig vorgesehen sind, das bzw. der formschlüssig in einen geometrisch angepassten Abschnitt des Implantats eingreift, so dass eine Verdrehsicherung gegeben ist.

Ein Abformen des Kieferbereichs erfolgt dann, wenn das eingesetzte Implantat eingewachsen ist, das Zahnfleisch über dem Implantat entfernt und ein Sulcus-Former auf dem Implantat befestigt ist. Nachdem der Sulcus-Former über eine vorgegebene Zeit - z. B. zwei Wochen - auf dem Implantat befestigt war, wird dieser entfernt, um sodann einen Negativabdruck zu erstellen, aufgrund dessen das Arbeitsmodell hergestellt wird, das folglich die Situation im Kiefer des Patienten darstellt, in dem der Zahnersatz zu integrieren ist.

Aus den Mess- bzw. Scanndaten ergibt sich nicht nur eine Ist-Sulcuslinie, sondern auch eine Emergenzlinie, die den oberen Randbereich des Zahnfleisches beschreibt, über den das Abutment hemorragt. Wie die Ist-Sulcuslinie kann auch die Emergenzlinie individuell verändert werden, um auf der Basis der sodann zur Verfügung stehenden Daten den Sulcus-Abschnitt des Abutments herzustellen.

Die Emergenzlinie, die im eigentlichen Sinne eine Profillinie ist, wird unmittelbar aus den Mess- bzw. Scanndaten ermittelt, wobei gleichfalls - wie bei der Ist-Sulcuslinie - aus Messdaten einzelne zweite Messpunkte ermittelt werden, die untereinander verbunden die Emergenzlinie definieren. Dabei kann nach entsprechend erfolgter Ermittlung der Emergenzlinie diese automatisch in ihrem Verlauf verändert werden, insbesondere umfangsseitig insgesamt um eine Strecke d wie d ≤ 0,5 mm in Richtung des Implantats verschoben werden. Ein Verschieben in entgegengesetzte Richtung ist gleichfalls möglich.

Liegt die Ist-Sulcuslinie auf der Umfangsfläche des Sulcus-Formers, sind folglich die Daten der Ist-Sulcuslinie an die des Sulcus-Formers angeglichen, so verläuft die Emergenzlinie außerhalb des Sulcus-Formers.

Zur Bildung der Umhüllenden des Sulcus-Abschnittsmodells werden sodann die in ihrer Anzahl gleichen ersten und zweiten Punkte untereinander verbunden, ohne dass diese sich schneiden. Dabei wird der Verlauf der Verbindungslinien durch die Messdaten des Sulcus-Bereichs ermittelt. Die die Umhüllende bildenden Linien können sodann automatisch oder interaktiv in ihrem Verlauf verändert werden.

Wird die Ist-Sulcuslinie verändert, so wird infolgedessen der Bibliotheksanteil an Daten, die dem Sulcus-Former entsprechen, verändert. Insbesondere dann, wenn die Sulcuslinie angehoben, also in Richtung der Emergenzlinie verschoben wird, wird der Bibliotheksanteil der Daten des Sulcus-Formers entsprechend erhöht.

Insbesondere ist vorgesehen, dass die durch das Messen des Sulcus-Bereichs des Arbeitsmodells ermittelten Daten und damit das aus den Daten abgeleitete Oberflächenmodell in Form des Sulcus-Abschnittsmodells interaktiv derart verändert wird, dass die Gesamtaußenfläche des Sulcus-Abschnittsmodells radial konvex und axial konvex oder geradlinig verläuft. Hierdurch wird sichergestellt, dass bei dem in CAD/CAM-Technik herzustellenden Abutment, und zwar in dessen Sulcus-Bereich, Ablagerungen zwischen diesem und dem Zahnfleisch nicht auftreten.

Insbesondere ist vorgesehen, dass das Modell radial gedehnt wird, wodurch ein sattes Anliegen des Sulcus-Bereichs des Abutments am Zahnfleisch sichergestellt wird. Es wird folglich das Radieren der Zahnfleischmaske simuliert, wie dies bei üblicher Technik erfolgt. Ferner können die Daten zur Glättung der Außenfläche des Sulcus-Bereichs verändert werden.

Sollten Messdaten vorliegen, die unterhalb des Nullpunktbereichs liegen, so ist erwähntermaßen erfindungsgemäß vorgesehen, dass ein Verschieben der Ist-Sulcuslinie in Richtung des Nullpunktbereichs erfolgt, so dass infolgedessen stets sichergestellt ist, dass der implantatseitige Abschnitt des Abutments geometrisch an das eingesetzte Implantat exakt angepasst ist.

Fehlende Messdaten zwischen der Ist-Sulcuslinie oder der automatisch oder interaktiv veränderten Ist-Sulcuslinie, die als Hilfs-Sulcuslinie bezeichnet wird, und dem Nullpunktbereich des Sulcus-Abschnitts werden sodann durch die Daten des Sulcus-Formers ergänzt.

Erfindungsgemäß wird der Sulcus-Bereich des Abutments individuell gestaltet, also der Teil des Abutments, der zum oberen Teil hin, also dem Kopfabschnitt durch die Emergenzlinie bzw. das Emergenzprofil und zum unteren Teil durch den Nullpunktbereich begrenzt wird.

Der Sulcus-Abschnitt des Abutments kann automatisch exakt entsprechend des gemessenen Sulcus-Bereichs im Arbeitsmodell angeglichen und im erforderlichen Umfang geglättet werden. Insbesondere kann vorgesehen sein, dass ein automatisches Glätten unter Berücksichtigung der Emergenzlinie bzw. des Emergenzprofils und des Nullpunktbereichs erfolgt.

Es kann ein automatisches Verändern der aus den Messdaten ermittelten geometrischen Daten, die den Sulcus-Bereich repräsentieren, derart erfolgen, dass sich eine vollständig konvexe Geometrie bei gleichzeitiger Glättung der Oberfläche ergibt.

Ferner kann der Sulcus-Bereich aufgeweitet bzw. vergrößert werden. Dies kann insbesondere im Bereich der Emergenzlinie erfolgen, wodurch ein sattes Anliegen des in CAD/CAM-Technik herzustellenden Abutments an das Zahnfleisch erfolgt.

Fehlende Daten werden durch die des verwendeten Sulcus-Formers ergänzt, d. h. dessen geometrische Informationen bzw. Umfangsgeometriedaten werden übernommen. Sofern - wie im Energenzprofilbereich - eine Anpassung an den Sulcus-Former nicht erfolgen soll, werden durch geeignete Algorithmen fehlende Daten ergänzt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: einen Zahnersatz,
- Fig. 2: ein Arbeitsmodell,
- Fig. 3: ein durch Scannen einer Lücke des Arbeitsmodells in Fig. 2 ermitteltes Bild mit Messpunkten,
- Fig. 4: eine weitere Darstellung der Lücke in dem Arbeitsmodell gemäß Fig. 2 mit überlagertem Sulcus-Former,
- Fig. 5: eine Darstellung von Messdaten mit überlagertem Sulcus-Former und
- Fig. 6: eine der Fig. 5 entsprechende Darstellung mit individuell veränderten Daten.

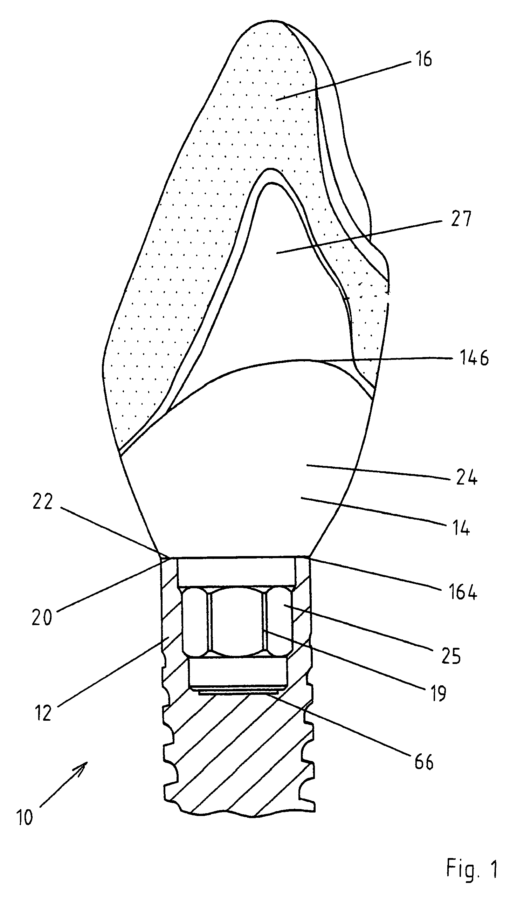

In Fig. 1 ist rein prinzipiell ein Zahnersatz 10 dargestellt, der einen Frontzahn ersetzen soll. Der Zahnersatz 10 besteht dabei aus einem in den Kieferbereich, in dem der Frontzahn ersetzt werden soll, vorzugsweise einschraubbaren Implantat 12, einem Abutment 14, das formschlüssig und unverdrehbar in das Implantat 12 einsetzbar und mit diesem verbindbar ist, sowie einer verblendeten Krone 16. Bezüglich des prinzipiellen Aufbaus des Zahnersatzes 10 wird jedoch auf hinlänglich bekannte Konstruktionen verwiesen, so dass es insoweit umfassender Erläuterungen nicht bedarf. Daher wird auch nicht näher auf eine Positioniereinrichtung bzw. Positionierungselemente, die einerseits in dem Implantat 12 und andererseits an dem Abutment 14 vorgesehen sind, eingegangen. Allerdings ist aus der Prinzipdarstellung der Fig. 1 ein Hexagon 19 als Positioniereinrichtung erkennbar, das in eine entsprechend geometrisch angepasste Aufnahme in das Implantat 12 eingreift.

Das Implantat 12 weist eine Schulter 20 auf, auf der ein umlaufender Bund 22 des Abutments 14 bei ordnungsgemäßer Positionierung aufsitzt. Das Abutment 14 selbst wird über ein nicht näher dargestelltes und das Implantat 14 in Längsachsenrichtung durchsetzendes Schraubelement mit dem Implantat 12 verbunden. Hierzu weist das Implantat 12 ein Sackloch mit entsprechendem Innengewinde auf, ohne dass dies der Zeichnung zu entnehmen ist.

Erfindungsgemäß wird das Abutment 14 individuell gestaltet, und zwar zumindest in einem sogenannten Sulcus-Abschnitt 24, der bei fixiertem Abutment 14 vom Zahnfleisch umgeben ist. Der Sulcus-Abschnitt 24 geht implantatseitig in einen Implantatabschnitt 25 über, dessen Geometrie durch das in dem Kiefer eingesetzte Implantat vorgegeben ist, also unabhängig von der ansonsten individuellen Gestaltung des Abutments 14. Ferner geht der Sulcus-Abschnitt 24 kopfseitig in einen Kopfabschnitt 27 über, der von der verblendeten Krone 16 umgeben ist.

Die Trennlinie zwischen dem Kopfabschnitt 27 und dem Sulcus-Abschnitt 24 wird durch eine sogenannte Emergenzlinie 146 begrenzt. Die Emergenzlinie 146 wird an den oberen Rand des Zahnfleischsaums ausgerichtet, über den der Kopfabschnitt 27 des Abutments 14 ragt. Gegebenenfalls kann die Emergenzlinie 146 nach deren Ermittlung in Richtung des Implantats 12 oder des Kopfabschnitts 27 verschoben werden.

Ein sogenannter Nullpunktbereich trennt den Sulcus-Abschnitt 24 von dem Implantatabschnitt 25. In der zeichnerischen Darstellung der Fig. 1 verläuft der Bund 22 in dem Nullpunktbereich. Um entsprechend der Umgebungsbedingungen im Kiefer, in den der Zahnersatz 10 eingesetzt wird, den Sulcus-Abschnitt 24 zu gestalten, wird erfindungsgemäß wie folgt verfahren.

In gewohnter Weise wird zunächst nach Entfernen des zu ersetzenden Zahnes in den Kieferknochen des Patienten ein Implantat eingesetzt. Nachdem das Implantat in den Knochen eingewachsen ist, wird das das Implantat abdeckende Zahnfleisch geöffnet, um einen sogenannten Sulcus-Former einzusetzen. Nachdem dieser über eine einem Erfahrungswert folgende Zeit, z. B. nach zwei Wochen, in der Zahnlücke verblieb, wird dieser entfernt, um sodann durch Abformen des Kiefers in diesem Bereich einen Negativabdruck herzustellen, aus dem ein Arbeitsmodell 26 hergestellt wird, das die Situation im Kiefer des Patienten wiedergibt, in den der Zahnersatz eingesetzt wird.

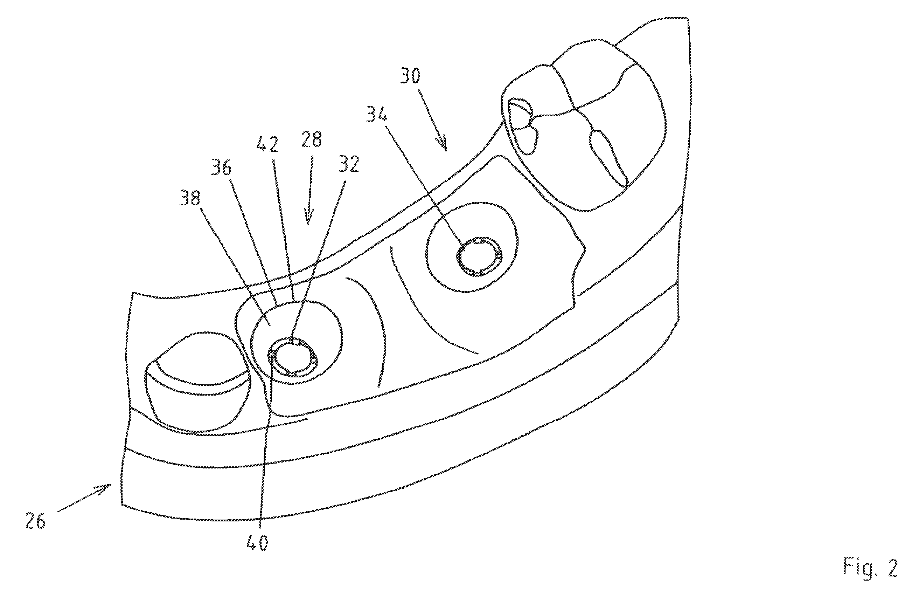

In Fig. 2 weist das Arbeitsmodell 26 zwei Lücken 28, 30 auf, in die jeweils ein Zahnersatz integriert wird. Das Arbeitsmodell 26 ist des Weiteren dahingehend von einem Zahntechniker bearbeitet worden, als dass in dem Arbeitsmodell 26 sogenannte Labor- oder Hilfsimplantate 32, 34 eingesetzt sind, die von der Orientierung und Lage her den Implantaten gleichkommen, die in den Kiefer eingesetzt sind. Der Bereich des Laborimplantats 32, 34, auf den ein Abutment aufsitzt oder zu dem das Abutment eine fest vorgegebene Positionierung einnimmt, der beim Implantat als Implantatanschluss und beim Laborimplantat als Hilfsimplantatanschluss bezeichnet ist, ist die sichtbare Außenfläche des Implantats bzw. des Laborimplantats.

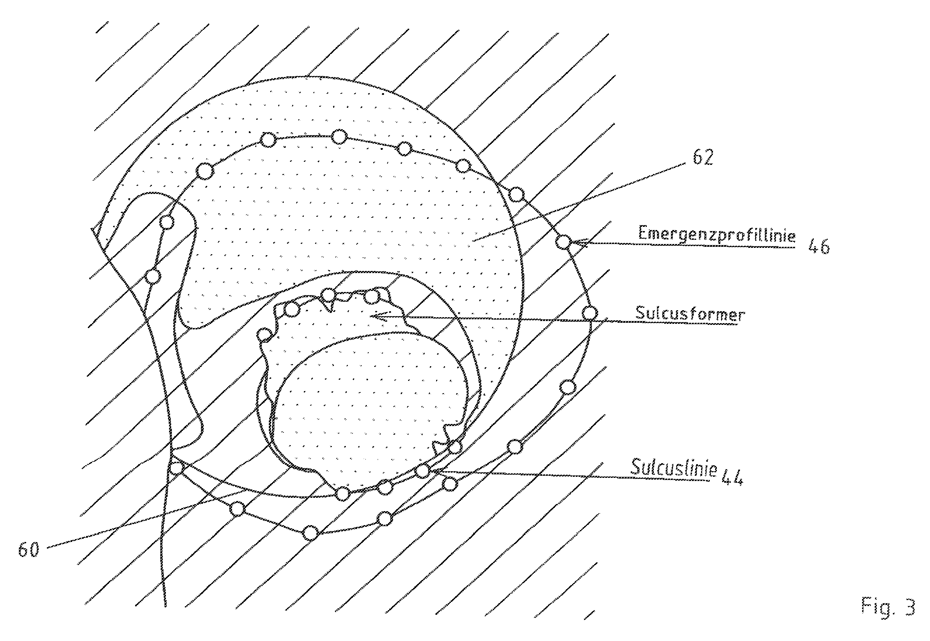

Sodann werden die Lücken 28, 30 gemessen, um Daten für den Bereich der Abutments zu ermitteln, der innerhalb des Sulcus-Bereichs verläuft. Dies wird anhand der Fig. 3 bis 5 rein beispielhaft erläutert.

So wird z. B. die Lücke 28 mit angrenzendem den Verlauf des Zahnfleisches real wiedergebenden Bereich 36, der im Ausführungsbeispiel die Lücke 28 umgibt, gescannt oder durch andere geeignete Verfahren gemessen. Dabei wird in einem ersten Messschritt in das Laborimplantat 32, dessen Lage und Orientierung erwähntermaßen mit dem realen Implantat, das in den Kieferknochen eingesetzt ist, übereinstimmt, ein Hilfselement - auch Scannhilfe genannt - eingesetzt, das zu dem Hilfsimplantat 32 eine definierte Orientierung aufweist, so dass die gemessenen Daten die Lage und Orientierung des Implantats im Kieferbereich wiedergeben.

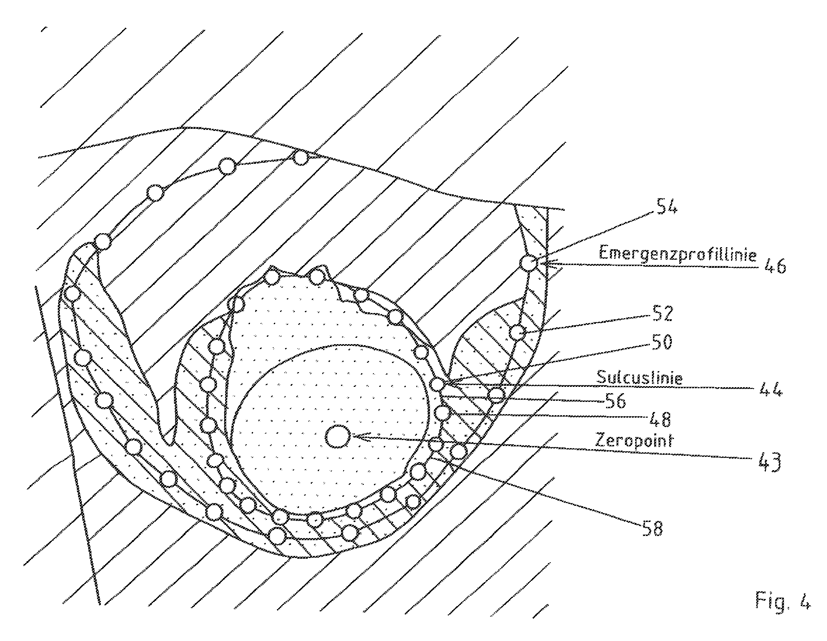

Da auch der in dem Implantat eingesetzte Sulcus-Former eine eindeutige Orientierung und Lage zu dem Implantat hat, können demzufolge die in einer Bibliothek abgelegten Daten des Sulcus-Formers zu den Daten des Laborimplantats und damit des realen Implantats eindeutig zueinander in Beziehung gesetzt werden, so dass infolgedessen Messdaten des Sulcus-Bereichs des Abdrucks, also des Bereichs 36, der zwischen Oberseite oder Schulter 40 des Laborimplantats 32, also dem Hilfsimplantatanschluss, und die obere Begrenzung des die Lücke 28 umgebenden Bereichs 36 verläuft, eindeutig koordinatenmäßig zu dem Implantat korreliert werden. Die Daten des Implantats, des Sulcus-Formers und die des Sulcus-Bereichs des Arbeitsmodells und damit des Zahnfleisches, das die Lücke umgibt, können folglich in einem gemeinsamen Koordinatensystem dargestellt werden, dessen Ursprung in Fig. 4 als Zeropoint 43 bezeichnet ist.

Um beim Scannen des Sulcus-Bereichs 38 des Arbeitsmodells 26, also des Bereichs, der die Lücke 28 umgibt, der sich zwischen der als Hilfsimplantatansatz zu bezeichnenden Schulter 40 bis zum oberen Rand 42 des Bereichs 36 erstreckt, ohne Abschattungen messen zu können, wird üblicherweise das Hilfselement entfernt, nachdem dieses zuvor bei ordnungsgemäßer Positionierung in dem Laborimplantat 32 zusammen mit dem relevanten Bereich des Arbeitsmodells 26, also zumindest unter Erfassung des Hilfsimplantatansatzes und des Bereichs 26 mit dem diesen begrenzenden oberen Rand 42 gemessen worden ist.

Die beim Messen wie Scannen ermittelten Punktwolken werden sodann in grafisch darstellbare Oberflächendaten umgewandelt, wie sich dies aus den Fig. 3 und 4 ergibt. Dabei werden die Messdaten, die durch das Scannen der Lücke 28 gewonnen werden, durch zwei für die Lücke charakteristische Linien begrenzt, die aus den Messdaten ermittelt werden.

Wie sich aus der Fig. 4 ergibt, werden aus den Messdaten eine Sulcus-Linie 44 und eine Emergenz-Profillinie 46 generiert. Die Emergenz-Profillinie 46 wird durch den oberen Rand des die Lücke 28 umgebenden Bereichs 36 bestimmt. Entsprechend wird aus den unteren, also in Bezug auf das Laborimplantat 32 diesem am nächsten liegenden Messdaten die Sulcus-Linie 44 ermittelt. Sowohl die Sulcus-Linie 44 als auch die Emergenz-Profillinie 46 werden dabei aus aus den Messdaten ermittelten und untereinander verbundenen Messpunkten 48, 50 bzw. 52, 54 gebildet. Die Messpunkte 48, 50 der Sulcus-Linie 44 werden als erste Messpunkte und die Messpunkte 52, 54 der Emergenz-Profillinie 46 als zweite Messpunkte bezeichnet. Die ersten Messpunkte 48, 50 und die diese verbindenden Abschnitte 56, 58 zur Bildung der Sulcus-Linie 44 werden dabei so modifiziert, dass sie datenmäßig auf der Umfangsfläche des Sulcus-Formers zu liegen kommen, dessen Daten in einer Bibliothek abgelegt sind. Dies soll prinzipiell durch die Fig. 3 verdeutlicht werden. Man erkennt die Sulcus-Linie 44, die auf der Umfangsfläche 60 eines dargestellten Sulcus-Formers 62 liegt.

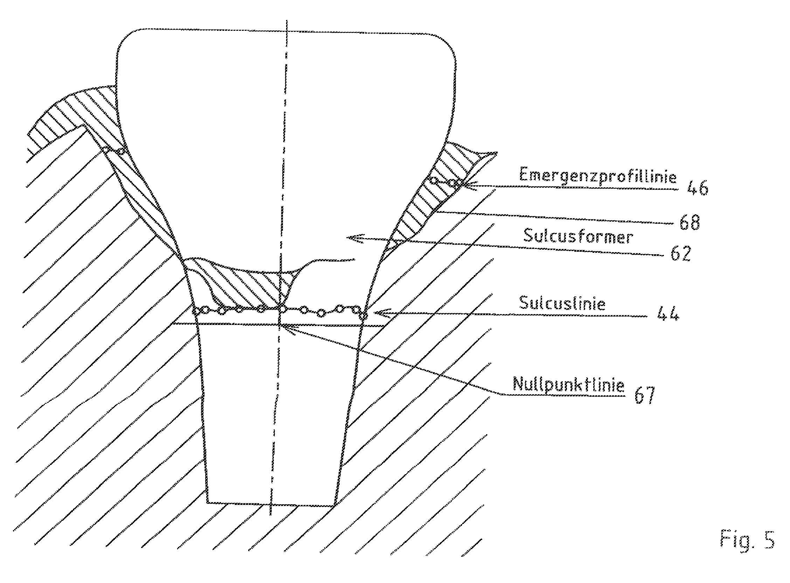

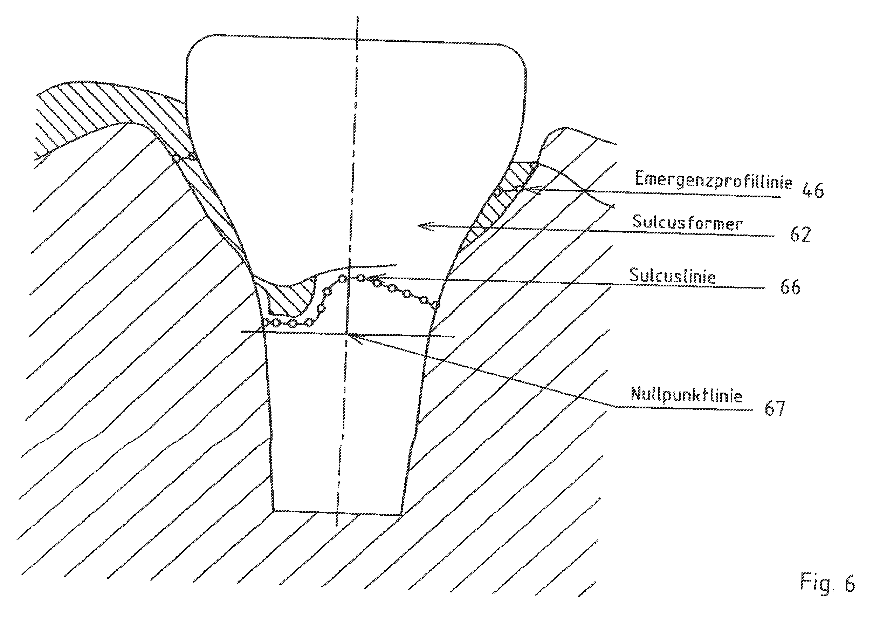

Der entsprechende Sulcus-Former 62 ist auch in den Fig. 5 und 6 dargestellt. Die Emergenz-Profillinie 46, die dem Höhenprofil des oberen Randes des Zahnfleisches, in das der Zahnersatz eingesetzt wird, und damit dem Rand 42 in dem Arbeitsmodel1 26 folgt, verläuft demgegenüber beabstandet zu dem Sulcus-Former 62. Fehlen Messdaten, so werden diese unter Berücksichtigung benachbarter Messdaten und unter Zugrundelegung eines geeigneten Algorithmus ermittelt. Bezüglich der Sulcus-Linie 44 werden fehlende Daten durch Oberflächendaten des Sulcus-Formers 62 ergänzt.

Die Sulcus-Linie 44 wird durch Daten bestimmt, die beim Scannen des Bereichs 36, der die Lücke 28 umgibt, noch erfasst werden. Die Sulcus-Linie 44 verläuft üblicherweise beabstandet zu der in Fig. 6 eingezeichneten Nullpunktlinie 67, unterhalb der das herzustellende Abutment fest vorgegebene Geometrienwerte aufweisen muss, um passgenau in das Implantat eingesetzt werden zu können. Die Nullpunktlinie 67 würde in Fig. 1 dem Bund 22 entsprechen. Vom Bund 22 bis zum unteren Ende des Abutments 14 wird folglich auf Bibliotheksdaten zurückgegriffen, die nicht verändert werden, wodurch sichergestellt ist, dass ungeachtet der individuellen Gestaltung des Sulcus-Bereichs 24 des Abutments 14 das Abutment 14 positionsgemäß und passgenau in das Implantat 12 eingesetzt wird.

Die zwischen der Sulcus-Linie 44 und der Nullpunktlinie 67 fehlenden Daten werden sodann durch die in der Bibliothek abgelegten Daten des Sulcus-Formers 62 ergänzt.

Wie ein Vergleich der Fig. 5 und 6 verdeutlicht, besteht die Möglichkeit, die Sulcus-Linie 44 individuell zu verschieben. So wird gemäß Fig. 6 ein Abschnitt der Sulcus-Linie 44 in Fig. 5 in Richtung der Emergenz-Profillinie 46 verschoben. Die so geänderte Sulcus-Linie 66 verläuft jedoch weiterhin auf der Oberfläche des Sulcus-Formers 62.

Aus den Fig. 5 und 6 wird auch deutlich, dass der Sulcus-Former 62 in seinem oberen Bereich zum zahnmedizinisch im eigentlichen Sinne als Sulcus bezeichneten Bereich 68 - bzw. dem im Ausführungsbeispiel der Fig. 2 die Lücke 28 umgebenden Bereich 36 - beabstandet verläuft.

Um Daten für die Umhüllende des in Fig. 1 mit 24 gezeichneten Sulcus-Abschnitts des Abutments 14 zu erhalten, werden die ersten Messpunkte 48, 50 mit den zweiten Messpunkten 52, 54 verbunden, wobei der Verlauf der Verbindungslinien aus den Scanndaten des sogenannten Sulcus-Bereichs 38 im Arbeitsmodel1 26 ermittelt wird, der durch den Verlauf des Zahnfleischs vorgegeben ist, der zwischen Emergenzlinie 46 und Nullpunktlinie 67 verläuft. Auf diese Weise werden Daten für ein Sulcus-Abschnittsmodell generiert, die zur Herstellung des Sulcus-Abschnitts 24 in CAM-Technik benötigt werden.

Erfindungsgemäß besteht die Möglichkeit, den Sulcus-Abschnitt 24 nicht nur dadurch individuell zu gestalten, dass die Sulcus-Linie 46 in ihrem Verlauf verändert wird, sondern die aus den Messwerten ermittelten Oberflächendaten des Sulcus-Abschnittsmodells können auch dahingehend verändert werden, dass die Oberfläche geglättet wird. Dabei ist ergänzend und in hervorzuhebender Ausgestaltung vorgesehen, dass die Oberfläche derart verändert wird, dass diese vollumfanglich in axialer Richtung konvex, ggfs. abschnittsweise geradlinig, radial grundsätzlich konvex verläuft. Dies schließt jedoch nicht aus, dass sich abschnittsweise auch lokale konkave Oberflächenbereiche bei der Berechnung des Sulcus-Abschnittsmodells ergeben, die nicht geglättet werden, so dass der in CAD/CAM-Technik hergestellte Sulcus-Abschnitt 24 entsprechende Einbuchtungen aufweist.

Insbesondere ist vorgesehen, dass das aus den Messdaten unter Berücksichtigung der Bibliotheksdaten des Sulcus-Formers 62 hergestellte Sulcus-Abschnittsmodell, aus dem der Sulcus-Abschnitt 24 in CAD/CAM-Technik hergestellt wird, im Bereich der Emergenz-Profillinie 46 aufgeweitet wird, so dass infolgedessen ein sattes Anliegen des Sulcus-Abschnitts 24 an dem Zahnfleisch im Bereich des Austrittsbereichs des Abutments aus dem Zahnfleisch gegeben ist.

Des Weiteren wird in bevorzugter Weise der Verlauf der Emergenz-Profillinie 46 dahingehend verändert, dass die zur Konstruktion des Sulcus-Abschnitts 24 benötigte Emergenz-Profillinie in Richtung der Sulcus-Linie verschoben wird. So kann die zur Herstellung des Sulcus-Abschnitts 24 berücksichtigte Emergenz-Profillinie z. B. im Abstand von bis zu 0,5 mm zu der gemessenen Emergenz-Profillinie verlaufen.

In Fig. 1 ist die zur Herstellung des Sulcus-Abschnitts 24 berücksichtigte Emergenzlinie mit dem Bezugszeichen 146 und die Nullpunktlinie mit dem Bezugszeichen 164 gekennzeichnet, die mit dem umlaufenden Bund 20 zusammenfällt.

Der von der verblendeten Krone 16 umgebene obere Abschnitt oder Kopfabschnitt 27 des Abutments 14 kann gleichfalls individuell gestaltet werden. Hierzu ist vorgesehen, dass in die Lücke 28 ein physisches Wax up eingesetzt wird, das von der äußeren Gestaltung her dem zu ersetzenden Zahn entspricht. Sodann erfolgt ein Scannen, um die Oberflächengeometrie zu ermitteln. Diese Oberflächengeometrie wird unter Berücksichtigung der Dicke der verblendeten Krone 16 reduziert, um auf der Basis dieser Daten die Oberflächengeometrie des Kopfabschnitts 27 des Abutments 14 festzustellen. Somit kann faziale und/oder bukkale und/oder mesiale und/oder distale und/oder linguale und/oder okklusale Fläche des Kopfabschnitts 27 dem Verlauf der entsprechenden Außenflächen der Verblendung 18 geometrisch folgen.

Das Abutment 14 selbst wird aus einem Rohling oder Halbfabrikat hergestellt. Ein entsprechender Rohling bzw. ein Halbfabrikat kann bereits als vorgefertigter Abschnitt den Implantatabschnitt 25 aufweisen

### Bezugszeichenliste

- 10: Zahnersatz
- 12: Implantat
- 14: Abutment
- 16: Krone
- 19: Hexagon
- 20: Schulter
- 22: Band
- 24: Sulcus-Abschnitt
- 25: Implantatabschnitt
- 26: Arbeitsmodell
- 27: Kopfabschnitt
- 28: Lücke
- 30: Lücke
- 32: Labor- oder Hilfsimplantat
- 34: Labor- oder Hilfsimplantat
- 36: Bereich
- 38: Sulcusbereich
- 40: Schulter
- 42: oberer Rand
- 44: Sulcus-Linie
- 43: Zeropoint
- 46: Emergenzlinie
- 48: Messpunkt
- 50: Messpunkt
- 52: Messpunkt
- 54: Messpunkt
- 56: Abschnitt
- 58: Abschnitt
- 60: Umfangsfläche
- 62: Sulcusform
- 66: geänderte Sulcuslinie
- 67: Nullpunktlinie
- 68: Sulcus

- 146: Emergenzlinie
- 164: Nullpunklinie

## Patentansprüche

1. Verfahren zum Herstellen eines individuellen Abutments (14) bestimmt für einen Zahnersatz (10) zum Einsetzen in ein in einem Kieferbereich verankertes Implantat (12) mit abutmentseitig verlaufendem Implantatanschluss unter Verwendung eines von dem mit dem Implantat versehenen Kieferbereich abgeformten Arbeitsmodells (26), wobei der oberhalb des Implantats freigelegte und durch einen von dem Implantatanschluss ausgehenden Sulcus-Former (62) geformte Sulcus-Bereich des Zahnfleisches in dem Arbeitsmodell nachgebildet ist und wobei das herzustellende Abutment einen innerhalb des Sulcus-Bereichs verlaufenden Sulcus-Abschnitt (24) und einen sich anschließenden Kopfabschnitt (27) zur Aufnahme eines Zahnersatzteils (16) umfasst, das gegebenenfalls integraler Bestandteil des Kopfabschnitts ist,
**dadurch gekennzeichnet,**
**dass** der Sulcus-Bereich des einen dem Implantatanschluss entsprechenden Hilfsimplantatanschluss aufweisenden Arbeitsmodells (26) gemessen wird, dass auf der Basis der durch die Messung gewonnenen Daten ein Sulcus-Abschnittsmodell ermittelt wird mit einer Umfangsfläche und einer diese implantantseitig begrenzenden Ist-Sulcuslinie, dass fehlende Daten zwischen ermitteltem Hilfsimplantatanschluss oder einem auf diesen bezogenen Nullpunktbereich und der Ist-Sulcuslinie (44) oder einer durch Verändern der Ist-Sulcuslinie festgelegten Hilfs-Sulcuslinie (66) durch erste Bibliotheksdaten ergänzt werden, die dem Sulcus-Former (62) zugeordnet sind, und dass die Daten des Sulcus-Abschnittsmodells unter Berücksichtigung der Ist-Sulcuslinie oder der Hilfs-Sulcuslinie und der ersten Bibliotheksdaten zur Herstellung des Sulcus-Abschnitts verwendet werden.

2. Verfahren nach Anspruch 1,
**dadurch gekennzeichnet,**
**dass** aus implantatseitig naheliegenden Messdaten des Sulcus-Bereichs des Arbeitsmodells (26) erste Messpunkte (48, 50) ermittelt werden, aus deren Verbindungen untereinander die Ist-Sulcuslinie (44) gebildet wird, wobei sowohl die ersten Messpunkte als auch die Ist-Sulcuslinie nach gegebenenfalls erforderlichen Datenmodifikationen auf der Oberfläche des Sulcus-Formers (62) liegen.

3. Verfahren nach Anspruch 1 oder 2,
**dadurch gekennzeichnet,**
**dass** die Daten des Hilfsimplantatanschlusses und die Daten des Sulcus-Formers (62) mittels einer Lage und Orientierung des Implantats (12) wiedergebenden Hilfselement aufeinander abgestimmt werden, wobei insbesondere das Hilfselement von einem in dem Arbeitsmodell (26) eingesetzten Hilfsimplantat (32, 34) ausgeht, das entsprechend der Abformung des das Implantat aufweisenden Kiefers eingesetzt und bezüglich der geometrischen Verhältnisse dem Implantat entspricht.

4. Verfahren nach zumindest einem dem vorhergehenden Ansprüche,
**dadurch gekennzeichnet,**
**dass** eine Emergenzlinie (46, 146) derart festgelegt wird, dass diese der das Zahnfleisch nachgebildeten oberen Grenze des Sulcus-Bereichs in dem Arbeitsmodell (26) folgt oder unterhalb einer durch die nachgebildete Grenze festgelegten Austrittslinie in einem Abstand d mit d ≤ 0,5 mm verläuft, wobei insbesondere die Messdaten zur Ermittlung der Emergenzlinie durch Bibliotheksdaten ergänzt werden und vorzugsweise die Emergenzlinie derart festgelegt wird, dass diese oberhalb der gemessenen oberen Grenze des Sulcus-Bereichs verläuft.

5. Verfahren nach zumindest einem der vorhergehenden Ansprüchen,
**dadurch gekennzeichnet,**
**dass** das Sulcus-Abschnittsmodell bezüglich der Ist-Sulcuslinie (44) und/oder der Emergenzlinie (44) individuell automatisch und/oder interaktiv verändert wird.

6. Verfahren nach zumindest einem der vorhergehenden Ansprüche,
**dadurch gekennzeichnet,**
**dass** die Daten der Umfangsfläche des Sulcus-Abschnittsmodells automatisch oder interaktiv derart verändert werden, dass die Umfangfläche umlaufend axial betrachtet konvex oder geradlinig verläuft und/oder dass die Daten der Umfangsfläche des Sulcus-Abschnittsmodells automatisch oder interaktiv derart verändert werden, dass die Umfangsfläche umlaufend radial betrachtet konvex verläuft, wobei insbesondere die Umfangsfläche des Sulcus-Abschnittsmodells vorzugsweise automatisch geglättet wird.

7. Verfahren nach zumindest einem der vorhergehenden Ansprüche,
**dadurch gekennzeichnet,**
**dass** der Nullpunktbereich durch zweite Bibliotheksdaten festgelegt wird und dass zwischen dem Nullpunktbereich und dem Hilfsimplantatanschluss liegende Messpunkte (48, 50) der Ist-Sulcuslinie (44) auf den Nullpunktbereich bzw. auf eine durch diesen vorgegebene Nullpunktlinie (67) verschoben werden.

8. Verfahren nach zumindest einem der vorhergehenden Ansprüche,
**dadurch gekennzeichnet,**
**dass** sich an den Sulcus-Abschnitt ein mit dem Implantat (12) zu verbindender Implantatabschnitt (25) des Abutments (14) anschließt, dessen Geometrie in Abhängigkeit des eingesetzten Implantats vorgegeben wird.

9. Verfahren nach zumindest einem der vorhergehenden Ansprüche,
**dadurch gekennzeichnet,**
**dass** das Messen durch Scannen erfolgt.

10. Verfahren nach zumindest einem der vorhergehenden Ansprüche,
**dadurch gekennzeichnet,**
**dass** die Daten des Sulcus-Bereichs in triangulierte Oberflächenpunkte umgewandelt werden, die grafisch dargestellt werden, wobei insbesondere die triangulierten Punkte zur Bildung eines Oberflächenmodells als das Sulcus-Abschnittsmodell miteinander verbunden werden.

11. Verfahren nach zumindest einem der vorhergehenden Ansprüche,
**dadurch gekennzeichnet,**
**dass** fehlende Messdaten durch Bibliotheksdaten ersetzt werden, insbesondere fehlende Daten durch Bibliotheksdaten ersetzt werden, die Bereiche des Sulcusformers (62) repräsentierten.

12. Verfahren nach zumindest einem der vorhergehenden Ansprüche,
**dadurch gekennzeichnet,**
**dass** der Kopfabschnitt (27) des Abutments (14) in seiner fazialen und/oder bukkalen und/oder mesialen und/oder distalen und/oder okklusalen Fläche derart ausgebildet wird, dass diese dem Verlauf der fazialen und/oder bukkalen und/oder mesialen und/oder distalen und/oder okklusalen Fläche des von außen sichtbaren Zahnersatzteils (16) folgt.

13. Verfahren nach zumindest einem der vorhergehenden Ansprüche,
**dadurch gekennzeichnet,**
**dass** Anzahl der die Emergenzlinie (46) geometrisch festlegenden zweiten Punkte (52, 54) und Anzahl der die Ist- bzw. Hilfs-Sulcuslinie (44, 66) geometrischen festlegenden ersten Punkte (48, 50) gleich gewählt wird, wobei insbesondere die ersten und zweiten Punkte über sich nicht schneidende Verbindungslinien verbunden werden, die die Umhüllende des Sulcus-Abschnittsmodell vorgeben.

14. Verfahren nach zumindest einem der vorhergehenden Ansprüche,
**dadurch gekennzeichnet,**
**dass** der Verlauf der Verbindungslinien aus Daten des Sulcus-Bereichs ermittelt werden.

15. Verfahren nach zumindest einem der vorhergehenden Ansprüche,
**dadurch gekennzeichnet,**
**dass** die Verbindungslinien in ihrem Verlauf automatisch und/oder interaktiv verändert werden.

## Claims

1. Method for producing an individual abutment (14), meant for a dental prosthesis (10), for insertion into an implant (12) anchored in a jaw area with an implant attachment running on the abutment side, while using a working model (26) shaped while using a jaw area provided with the implant, wherein the sulcus area of the gum uncovered above the implant and shaped by a sulcus-former (62) extending from the implant attachment being reproduced in the working model and wherein the abutment to be fabricated comprising a sulcus section (24) running within the sulcus area and an adjoining head section (27) to admit a part of a dental prosthesis (16), which if necessary is an integral component of the head section,
**characterized in that**
the sulcus area of the working model (26) having an auxiliary implant attachment corresponding to the implant attachment is measured; that on the basis of the data obtained by the measurement, a sulcus section model is determined with a circumferential surface and a de-facto sulcus line limiting it on the implant side; that missing data between the determined auxiliary implant attachment or a zero-point area related to this and the de-facto sulcus line (44) or an auxiliary sulcus line (66) determined by alteration of the de-facto sulcus line are supplemented by first library data which are assigned to the sulcus-former (62); and that the data of the sulcus section model are used, while allowing for the de-facto sulcus line or the auxiliary sulcus line and the first library data to produce the sulcus section.

2. Method according to claim 1,
**characterized in that**
from measurement data on the sulcus area of the working model (26) close to the implant side, first measurement points (48, 50) are determined, from the connection of which to each other a de-facto sulcus line (44) is formed, with both the first measurement points and the de-facto sulcus line lying on the surface of the sulcus-former (62) after possibly required data modification.

3. Method according to claim 1 or 2,
**characterized in that**
the data on the auxiliary implant attachment and the data on the sulcus-former (62) are adjusted to each other by means of an auxiliary element conveying the position and orientation of the implant (12), wherein, in particular, the auxiliary element derives from an auxiliary implant (32, 34) used in the working model (26), which is inserted corresponding to the modeling of the jaw having the implant and matches the implant as regards the geometric relationships.

4. Method according to at least one of the preceding claims, **characterized in that**
an emergence line (46, 146) is determined so that it follows the upper boundary of the sulcus area modeled on the gum in the working model (26) or runs below the emergence line determined by the modeled boundary at an interval d with d ≦ 0.5 mm, wherein, in particular, the measured data for determining the emergence line are supplemented by library data and preferably the emergence line is set so that it runs above the measured upper boundary of the sulcus area.

5. Method according to at least one of the preceding claims,
**characterized in that**
the sulcus section model is individually altered automatically and/or interactively relative to the de-facto sulcus line (44) and/or the emergence line (44).

6. Method according to at least one of the preceding claims,
**characterized in that**
the data on the circumferential surface of the sulcus section model are automatically or interactively altered so that the circumferential surface, considered axially in circumferential fashion, runs convex or in a straight line and/or that the data on the circumferential surface of the sulcus section model are automatically or interactively altered so that, viewed circumferentially and radially, the circumferential surface runs convex, wherein, in particular, the circumferential surface of the sulcus section model preferably is automatically smoothed.

7. Method according to at least one of the preceding claims,
**characterized in that**
the zero point area is determined through secondary library data, and that measured points (48, 50) of the de-facto sulcus line (44) lying between the zero point area and the auxiliary implant attachment are shifted to the zero point area or to a zero point line (67) preset by it, respectively.

8. Method according to at least one of the preceding claims,
**characterized in that**
an implant section (25) of the abutment (14) to be connected with the implant (12) adjoins the sulcus section, whose geometry is preset in dependence on the implant used.

9. Method according to at least one of the preceding claims,
**characterized in that**
the measuring is done by scanning.

10. Method according to at least one of the preceding claims,
**characterized in that**
the data of the sulcus area are converted into triangulated surface points, which are graphically depicted, wherein in particular the triangulated points for forming a surface model are connected with each other as the sulcus section model.

11. Method according to at least one of the preceding claims,
**characterized in that**
missing measured data are replaced by library data, in particular missing data are replace by library data, which represent areas of the sulcus-former (62).

12. Method according to at least one of the preceding claims,
**characterized in that**
the head section (27) of the abutment (14), in its facial and/or buccal and/or mesial and/or distal and/or occlusal surface is configured so that it follows the contour of the facial and/or buccal and/or mesial and/or distal and/or occlusal surface of the dental prosthesis part (16) visible from the outside.

13. Method according to at least one of the preceding claims,
**characterized in that**
the number of the second points (52, 54) that geometrically determine the emergence line (46) and the number of the first points (48, 50) that geometrically determine the de-facto or auxiliary sulcus line (44, 46) are chosen to be equal, wherein in particular the first and second points are joined via non-intersecting connection lines that preset the envelope of the sulcus section model.

14. Method according to at least one of the preceding claims,
**characterized in that**
the contour of the connection lines is determined from data on the sulcus area.

15. Method according to at least one of the preceding claims,
**characterized in that**
the connecting lines are automatically and/or interactively altered in their course.

## Revendications

1. Procédé destiné à la fabrication d'un pilier individuel (14) pour une prothèse dentaire (10) prévu pour être mis en place dans un implant (12) ancré dans une zone de la mâchoire avec une connexion d'implant s'étendant du côté du pilier, en utilisant un modèle de travail (26) façonné à partir de la zone de la mâchoire dotée de l'implant, sachant que la zone du sillon gingival à nu au-dessus de l'implant et formée par un forme-sillon (62) partant de la connexion d'implant est reproduite dans le modèle de travail, et que le pilier à fabriquer comprend une section de sillon (24) s'étendant dans la zone du sillon et une section de tête (27) attenante pour recevoir une partie (16) de la prothèse dentaire qui, le cas échéant, fait partie intégrante de la section de tête,
**caractérisé en ce**
**que** la zone du sillon du modèle de travail (26) présentant une connexion d'implant auxiliaire correspondant à la connexion de l'implant est mesurée, que sur la base des données obtenues lors de la mesure, un modèle de section de sillon est déterminé avec une surface circonférentielle et une ligne de sillon réelle limitant celle-ci du côté de l'implant, que des données manquantes entre la connexion d'implant auxiliaire déterminée ou une zone de point nul relative à celle-ci et la ligne de sillon réelle (44) ou une ligne de sillon auxiliaire (66) déterminée par modification de la ligne de sillon réelle sont complétées par des premières données de bibliothèque qui sont assignées au forme-sillon (62), et que les données du modèle de section de sillon sont utilisées en prenant en compte la ligne de sillon réelle ou la ligne de sillon auxiliaire et les premières données de bibliothèque pour fabriquer la section de sillon.

2. Procédé selon la revendication 1,
**caractérisé en ce**
**qu'**à partir des données mesurées dans la zone du sillon du modèle de travail (26) à proximité du côté de l'implant sont déterminés des premiers points de mesure (48, 50) dont les connexions entre eux sont utilisées pour former la ligne du sillon réelle (44), sachant que les premiers points de mesure ainsi que la ligne du sillon réelle se trouvent à la surface du forme-sillon (62) après une modification éventuellement nécessaire des données.

3. Procédé selon la revendication 1 ou 2,
**caractérisé en ce**
**que** les données de la connexion d'implant auxiliaire et les données du forme-sillon (62) sont mutuellement ajustées au moyen d'un élément auxiliaire indiquant la position et l'orientation de l'implant (12), sachant en particulier que l'élément auxiliaire dérive d'un implant auxiliaire (32, 34) utilisé dans le modèle de travail (26) qui est mis en place conformément à l'empreinte de la mâchoire présentant l'implant et correspondant à l'implant en termes de rapports géométriques.

4. Procédé selon au moins l'une des revendications précédentes,
**caractérisé en ce**
**qu'**une ligne d'émergence (46, 146) est déterminée de sorte à suivre la limite supérieure de la zone du sillon représentée sur la gencive dans le modèle de travail (26) ou à s'étendre au-dessous d'une ligne de sortie déterminée par la limite représentée à un intervalle d tel que d ≤ 0,5 mm, sachant en particulier que les données mesurées pour déterminer la ligne d'émergence sont complétées par des données de bibliothèque et que, de préférence, la ligne d'émergence est déterminée de sorte à s'étendre au-dessus de la limite supérieure mesurée de la zone de sillon.

5. Procédé selon au moins l'une des revendications précédentes,
**caractérisé en ce**
**que** le modèle de travail du sillon est automatiquement et/ou interactivement modifié en fonction de la ligne réelle du sillon (44) et/ou de la ligne d'émergence (44).

6. Procédé selon au moins l'une des revendications précédentes,
**caractérisé en ce**
**que** les données de la surface circonférentielle du modèle de section de sillon sont modifiées automatiquement ou interactivement de telle sorte que la surface circonférentielle, considérée axialement sur le plan circonférentiel, s'étend de manière convexe ou en ligne droite et/ou que les données de la surface circonférentielle du modèle de section de sillon sont modifiées automatiquement ou interactivement de sorte que la surface circonférentielle considérée radialement sur le plan circonférentiel s'étend de manière convexe, sachant en particulier que la surface circonférentielle du modèle de section de sillon est de préférence automatiquement lissée.

7. Procédé selon au moins l'une des revendications précédentes,
**caractérisé en ce**
**que** la zone de point nul est déterminée par des données de bibliothèque secondaires et que des points de mesure (48, 50) de la ligne réelle du sillon (44) situés entre la zone de point nul et la connexion d'implant auxiliaire sont déplacés sur la zone de point nul ou sur une ligne de point nul (67) définie par celle-ci.

8. Procédé selon au moins l'une des revendications précédentes,
**caractérisé en ce**
**qu'**une section d'implant (25) du pilier (14) à connecter à l'implant (12) se rattache à la section de sillon, dont la géométrie est définie en fonction de l'implant mis en place.

9. Procédé selon au moins l'une des revendications précédentes,
**caractérisé en ce**
**que** la mesure est réalisée par scannage.

10. Procédé selon au moins l'une des revendications précédentes,
**caractérisé en ce**
**que** les données de la zone du sillon sont converties en points de surface triangulés représentés graphiquement, sachant en particulier que les points triangulés sont reliés entre eux pour former un modèle de surface en tant que modèle de section de sillon.

11. Procédé selon au moins l'une des revendications précédentes,
**caractérisé en ce**
**que** des données manquantes sont remplacées par des données de bibliothèque, en particulier que les données manquantes sont remplacées par des données de bibliothèque qui représentaient des zones du forme-sillon (62).

12. Procédé selon au moins l'une des revendications précédentes,
**caractérisé en ce**
**que** la section de tête (27) du pilier (14) est, dans sa surface faciale et/ou buccale et/ou mésiale et/ou distale et/ou occlusale, conçue de sorte à suivre le tracé de la surface faciale et/ou buccale et/ou mésiale et/ou distale et/ou occlusale de la partie de la prothèse dentaire (16) visible de l'extérieur.

13. Procédé selon au moins l'une des revendications précédentes,
**caractérisé en ce**
**que** le nombre de points secondaires (52, 54) déterminant géométriquement la ligne d'émergence (46) et le nombre de premiers points (48, 50) déterminant géométriquement la ligne du sillon réelle ou auxiliaire (44, 66) sont choisis à l'identique, sachant en particulier que les premiers points et les points secondaires sont reliés par des lignes de connexion qui ne se coupent pas et qui déterminent l'enveloppe du modèle de section de sillon.

14. Procédé selon au moins l'une des revendications précédentes,
**caractérisé en ce**
**que** le tracé des lignes de connexion est déterminé à partir des données de la zone du sillon.

15. Procédé selon au moins l'une des revendications précédentes,
**caractérisé en ce**
**que** les lignes de connexion sont automatiquement et/ou interactivement modifiées dans leur tracé.
